(19) **Europäisches Patentamt European Patent Office Office européen des brevets**

(11) **EP 4 694 141 A1**

(12) **EUROPEAN PATENT APPLICATION**

(43) Date of publication:
**11.02.2026 Bulletin 2026/07**

(21) Application number: **24306342.7**

(22) Date of filing: **08.08.2024**

(51) International Patent Classification (IPC):
*H04N 21/234* (2011.01)   *H04N 21/44* (2011.01)
*H04N 21/81* (2011.01)   *H04N 21/854* (2011.01)
*G06T 17/00* (2006.01)

(52) Cooperative Patent Classification (CPC):
**H04N 21/8146; H04N 21/23412; H04N 21/44012;
H04N 21/85406**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **COVA REGATEIRO, João Pedro
  35220 CHATEAUBOURG (FR)**
- **GOSSELIN, Philippe Henri
  35235 THORIGNE-FOUILLARD (FR)**
- **AVRIL, Quentin
  35830 BETTON (FR)**

(74) Representative: **Vossius & Partner
Patentanwälte Rechtsanwälte mbB
Siebertstraße 3
81675 München (DE)**

(54) **GENERAL SIGNALING OF MODEL PROPERTIES ENCODING IN SCENE AND AVATAR DESCRIPTIONS**

(57)    Some embodiments of a method may include: obtaining encoded data corresponding to an avatar; decoding the encoded data into decoded data; parsing the decoded data into a data structure format, wherein the data structure format includes two or more parsed data structures, wherein the two or more parsed data structures include: one or more data structures corresponding to avatar data, and one or more data structures corresponding to neural network (NN) data; and rendering the avatar using the two or more parsed data structures.

**FIG. 2**

## Description

### INCORPORATION BY REFERENCE

The present application incorporates by reference in their entirety the following applications: European Patent Application Serial No. EP24306341, entitled "AVATAR JSON INTERCHANGE FILE FORMAT FOR CAPTURE PARAMETERS ENCODING" and filed August 8, 2024; European Patent Application Serial No. EP24305094, entitled "AVATAR JSON INTERCHANGE FILE FORMAT" and filed January 15, 2024 ("'094 application"); and European Patent Application Serial No. EP23306745, entitled "AVATAR MEDIA REPRESENTATION FOR TRANSMISSION" and filed October 10, 2023 ('745 application).

### BACKGROUND

The present application is related to encoding of 3D content data.

### SUMMARY

An example method in accordance with some embodiments may include: obtaining encoded data corresponding to an avatar; decoding the encoded data into decoded data; parsing the decoded data into a data structure format, wherein the data structure format comprises two or more parsed data structures, and wherein the two or more parsed data structures comprise: one or more data structures corresponding to avatar data, and one or more data structures corresponding to neural network (NN) data; and rendering the avatar using the two or more parsed data structures.

For some embodiments of the example method, the data structure format is compatible with Avatar JSON Interchange File (AJIF) format.

For some embodiments of the example method, the data structure format is compatible with Graphics Library Transmission Format (gITF).

For some embodiments of the example method, the data structure format is compatible with an extension of MPEG-I.

For some embodiments of the example method, the two or more parsed data structures comprise one or more models associated with the avatar.

For some embodiments of the example method, the two or more parsed data structures comprise one or more data structures corresponding to parameters of the avatar.

For some embodiments of the example method, the two or more parsed data structures comprise one or more data structures corresponding to geometries of the avatar.

For some embodiments of the example method, at least one of the one or more data structures corresponding to neural network (NN) data is associated with the avatar.

For some embodiments of the example method, at least one of the two or more parsed data structures references a composite of at least two of the two or more parsed data structures.

For some embodiments of the example method, at least one of the two or more parsed data structures is configured as a generated data type.

For some embodiments of the example method, the at least one parsed data structure configured as the generated data type comprises: a reference to a neural network data model, a reference to at least one raw data set configured as an input to the neural network data model, and an output data structure configured to store output data of the neural network data model.

Some embodiments of the example method may further include: passing the at least one raw data set through the neural network data model; and populating the output data structure with the output data of the neural network data model.

For some embodiments of the example method, the at least one raw data set comprises a composite of at least two or more data structures.

For some embodiments of the example method, one of the at least two or more data structures comprises point cloud data.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure.

It should be understood, however, that the embodiments described herein are not limited to the precise arrangements and instrumentalities shown in the drawings. In the drawings:

FIG. 1A is a system diagram illustrating an example set of interfaces for a system according to some embodiments.

FIG. 1B is a system diagram illustrating an example set of interfaces for a scene description (stored as an item in glTF.json), three video tracks, an audio track, and a JSON patch update track in an ISOBMFF file according to some embodiments.

FIG. 1C is a system diagram illustrating an example set of interfaces for an MPEG-I node hierarchy supporting elements of scene interactivity according to some embodiments.

FIG. 1D is a schematic plan view illustrating example relationships of extended reality scene description objects according to some embodiments.

FIG. 2 is a process diagram illustrating an example AJIF encode and decode architecture for avatar and neural network data according to some embodiments.

FIG. 3 is a schematic illustration showing an example avatar mesh according to some embodiments.

FIG. 4 is a flowchart illustrating an example process for parsing avatar and neural network data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

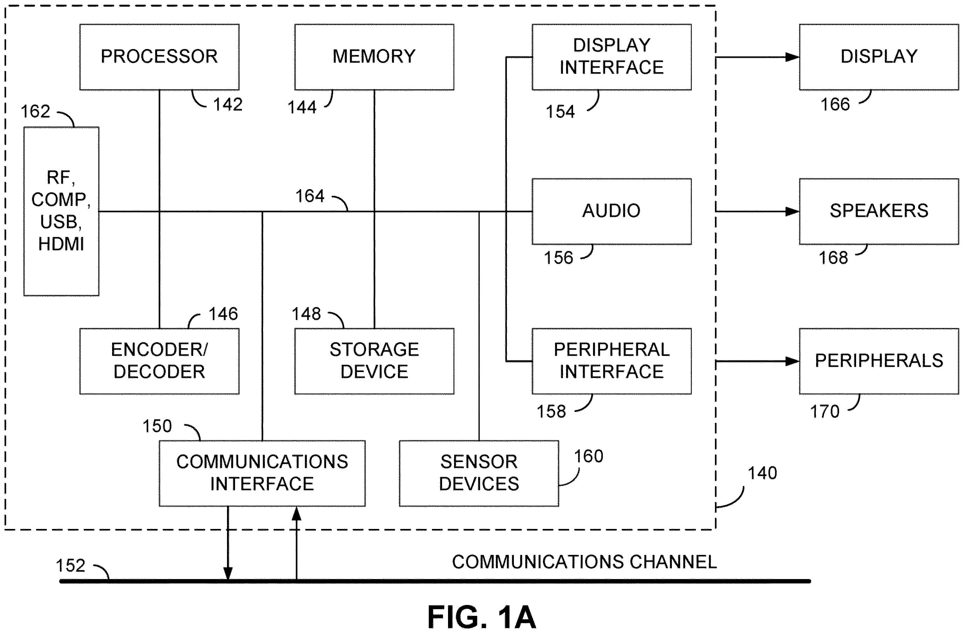

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.
The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.
System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

**Scene Description Framework for XR**

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

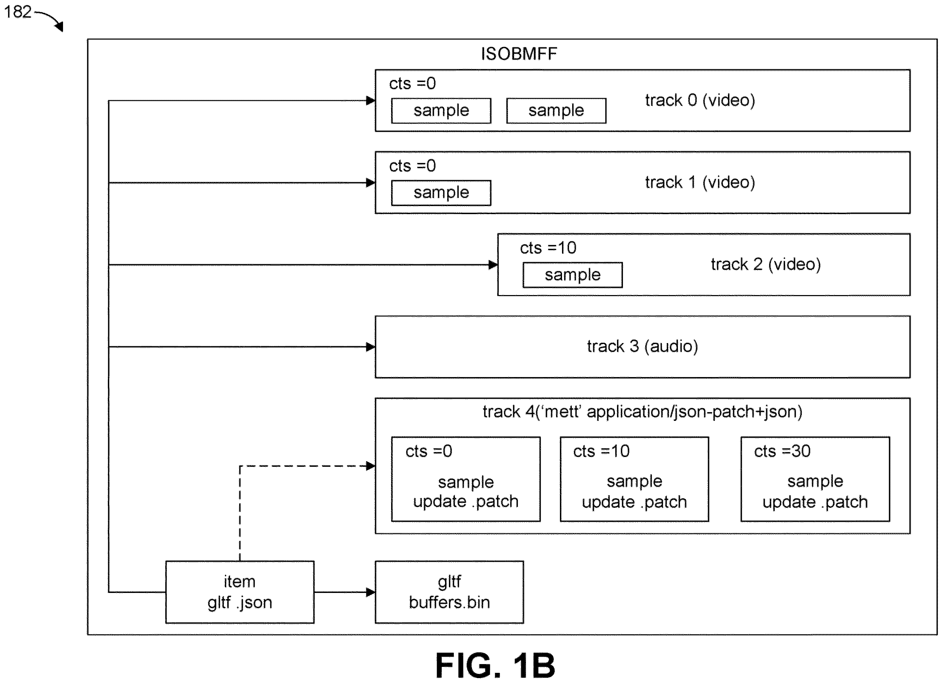

FIG. 1B is a system diagram illustrating an example set of interfaces for a scene description (stored as an item in glTF.json), three video tracks, an audio track, and a JSON patch update track in an ISOBMFF file 182 according to some embodiments.

**Runtime Interactivity**

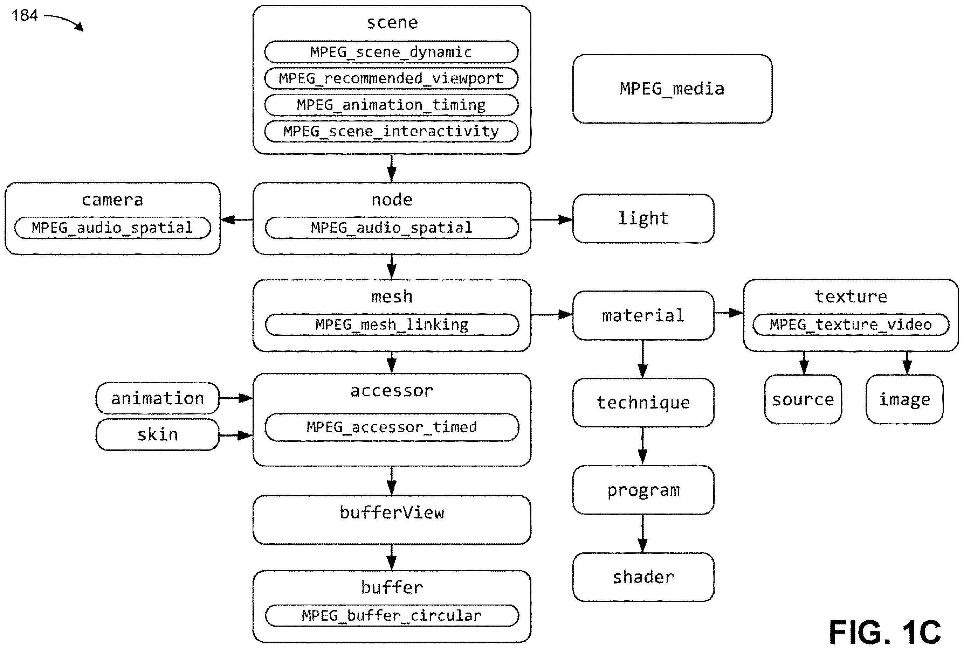

FIG. 1C is a system diagram illustrating an example set of interfaces for an MPEG-I node hierarchy 184 supporting elements of scene interactivity according to some embodiments.

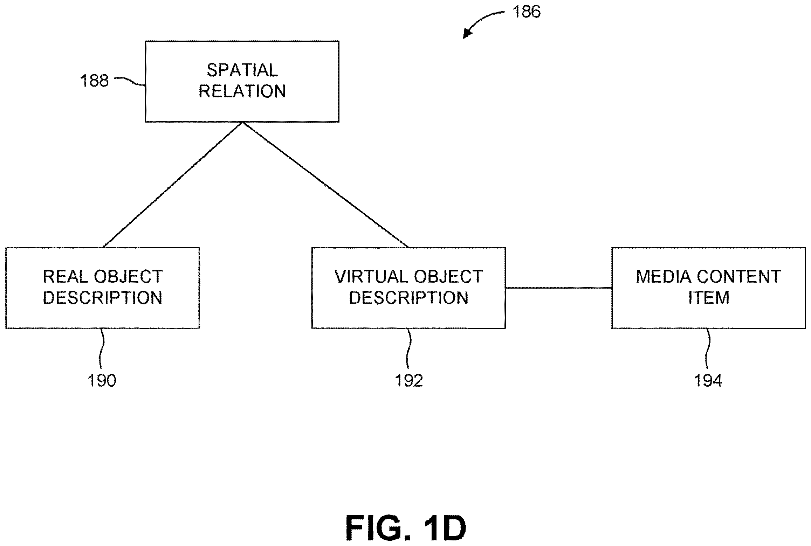

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 *("MPEG Extension")*.

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application discusses encoding of model parameters for the Avatar JSON Interchange File (AJIF) format for transmission and representation of avatar content for some embodiments. This application introduces a new signaling of model properties in a human readable file format that encodes an avatar instance.

There are many formats for encoding 3D content including mesh rigs, e.g. deformable 3D objects using weights. Example formats include FBX, USD, or glTF. As understood, none of these formats are dedicated to avatar data. In most cases, an application is tasked with interpreting the data, which may be in one of these example formats and which may relate to an avatar, and with how to parse and utilize the data. As understood, there is no dedicated avatar open format available that includes encoding of model properties, such as neural networks, optimization, or function base models. This application discusses signaling and use of a model for generating data.

This application introduces neural network encoding into the Avatar JSON Interchange File (AJIF) format, which stores additional properties about an avatar e.g., how to animate, render, and/or reconstruct avatar data. AJIF was introduced in the '094 application.

## Encoding and Decoding

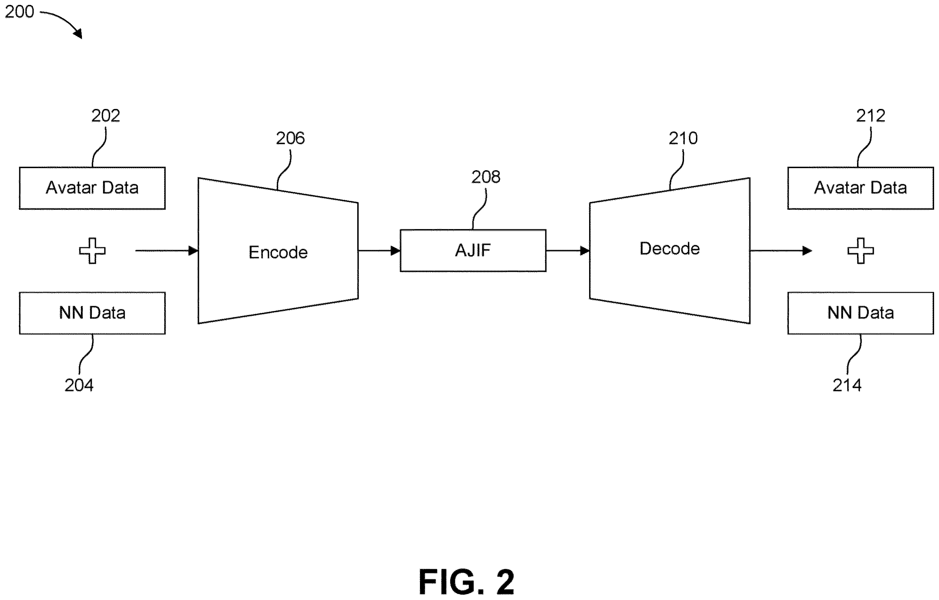

FIG. 2 is a process diagram illustrating an example AJIF encode and decode architecture for avatar and neural network data according to some embodiments. The AJIF format 208 stores avatar related data. This data is used as an input when encoding and as an output when decoding. FIG. 2 illustrates an architecture 200 in which the new additional neural network data 204, 214 are processed as part of the avatar data 202, 212.

The avatar data 202, 212 is a set of formal information supported by any computer, like a string, an image, or a tensor. For some embodiments, the avatar data respects some specifications. For instance, all integers are expected to be 64-bit signed integers for some embodiments. As a result, if the original data is not exactly in this format, like 32-bit unsigned integers, some processing may be required to build the avatar data. The new addition of neural network data 204, 214 follows the same rules as the avatar data 202, 212. In FIG. 2, the two types of information are separated for illustration purposes. In practice the neural network data is part of the avatar data. See the '094 application.

For some embodiments, the encoding process 206 may keep all avatar data without loss, may lose part of the avatar data, or may lose some floating precision of the avatar data. The decoding process 210 receives the AJIF data and decodes the AJIF data into avatar data 212 and neural network data 214. For some embodiments, the neural network data 214 may be part of the avatar data 212.

## Signaling with glTF Structure

## Signaling Models at the Root Level

Table 1 shows an extension of the existing glTF 2.0 root properties with a new "models" property or an "MPEG_models" root extension for some embodiments.

**Table 1.**

| Name | Type | Description | Required |
|------|------|-------------|----------|
| models | Model[1-*] | List of *Model.* | No |

This section describes the signaling of models that are used to generate data in gITF. These models may take many forms, such as, neural network (NN) models, optimization models, and/or but not exclusive probabilistic models. The "models" property contains a list of model definitions. Each item of this list is a Model, which are defined below.

**Accessor Composite Extension**

Table 2 shows a new "MPEG_accessor_composite" extension that extends the accessor.

**Table 2.**

| Name | Type | Description | Required |
|------|------|-------------|----------|
| items | integer[1-*] | List of references to an "accessor" | Yes |

Each element in the "items" list is a reference to an accessor in a list of accessors. This structure permits aggregation of access to several data structures and gives access as an input to a model that uses multiple inputs. If a system uses the "MPEG_accessor_composite" extension, the so-called mandatory properties of the "accessors" structure shall be optional or ignored in order to allow the creation of a "true" composite accessor, e.g., a list of indices to other types of data.

**Accessor Generated Extension**

Table 3 shows a new "MPEG_accessor_generated" extension that extends the accessor.

**Table 3.**

| Name | Type | Description | Required |
|-------|---------|-------------------------------------------------|----------|
| model | integer | References an item in the "models" collection(s). | Yes |
| input | integer | References an "accessor" in the accessor array. | Yes |

The extension "MPEG_accessor_generated" references a model in the "models" list to generate data given the "input" element. The "input" element references an accessor that holds the information and data. The model may request several input data items. In this case, the extension "MPEG_accessor_composite" may be used to aggregate several input data items. The model may handle several input data elements and, for some embodiments, guarantee the generation of some output data.

An application has the objective of handling and allocating the necessary memory for the data generated by the given model.

The following section focuses on the new additional properties and focuses on the AJIF structure. Nevertheless, the signaling content is transferable to gITF.

**AJIF Structure**

The AJIF has the following content shown in Table 1 and described in the '094 application. As shown in Table 1, a new "models" list is added.

**Table 4.**

| Name | Type | Description | Required |
|------------|--------------|----------------------|----------|
| models | Model[1-*] | List of *Model.* | No |
| data | RawData[1 -*] | List of *RawData.* | No |
| geometries | Geometry[1-*] | List of *Geometry.* | No |

(continued)

| Name | Type | Description | Required |
|---|---|---|---|
| nodes | Node[1-*] | List of *Node.* | No |
| textures | Texture[1-*] | List of *Texture.* | No |
| skeletons | Skeleton[1-*] | List of *Skeleton.* | No |
| controllers | Controller[1-*] | List of *Controller.* | No |
| lods | LOD[1-*] | List of *LCD.* | No |
| metadata | Metadata | Metadata about the avatar. | No |
| asset | Asset | Information about the file. | Yes |

Each of the elements in Table 4 except for the two last ones ("metadata" and "asset") are collections of *items.* Each collection is a list of items that may be referenced with their index in the list, in which the first index is zero. For instance, if the "nodes" collection contains three items, then the reference of the first one is 0. The reference of the second one is 1, and the reference of the third one is 2.

This application describes the signaling of models that are used to generate parts of the avatar. These models may take many forms, such as, neural network (NN) models, optimization models, and/or but not exclusive probabilistic models. The following section focuses on the new additional properties.

**Model Definition**

The "models" property contains a list of model definitions. Each item of this list is a Model structure and is defined in Table 5. Furthermore, Table 5 provides more detail of the *Model* structure mentioned in Table 4.

**Table 5.**

| Name | Type | Description | Required |
|---|---|---|---|
| name | string | Model name. | No |
| description | string | Free text about the model. | No |
| purpose | string | Purpose of the model. | No |
| version | string | Model version used. | Yes |
| format | string | The encoding format e.g., binary format or human-readable format (json or txt ). | Yes |
| type | String | Model type: "networks", "Gaussian", "PCA", "SingleMatrix", "Implicit", "Explicit", "function/algorithm" | Yes |
| id | string | Uniquely identities the model, e.g., "retina-resnet50". | Yes |
| uri | string | Model data content or reference to the model data content. | Yes |

The "name" property defines the name of the model and may be used for indexing, e.g., to retrieve the model by using its name.

The "description" property describes the model. For instance, a description may be used in user interfaces to help the user understand what the neural network is generating.

The "purpose" property defines the purpose of the model. Such purposes may be defined by an application or a standard, for instance. For example, "urn:mpeg:avatar:model:hairgenerator" may be used to indicate that this model generates hair of the avatar.

The "version" property identifies the version of the network model, thereby facilitating compatibility between software and hardware.

The "format" property identifies the encoding format of the neural network referenced by either the "uri" or "data" property. If the format is text, the encoding is expected to be of type "UTF-8".

The "type" property semantically identifies the type of model used. For example, the type identified may be a neural network model or a probabilistic PCA model.

The "uri" property contains or references the data of the model. This property must be consistent with the "format" and "version" properties. The data encoding schema is the same as the one used for the "uri" property in *RawData,* which may be a base64 encoding of the data, a URL, or the name of a file (see the '094 application).

**RawData Extension**

A *RawData* data structure contains low-level content, like tensors or images. Table 6 shows an extension to the *RawData* data structure. The description below Tabel 6 further describes the new attributes added to the attributes defined in the '094 application. Furthermore, Table 6 provides more detail of the *RawData* structure mentioned in Table 4.

**Table 6.**

| Name | Type | Description | Required |
|---|---|---|---|
| name | string | RawData name. | No |
| type | string | Data type: "dense", "sparse", or "image" | Yes |
| uri | string | Data content or reference to the data content (depends on type). | Yes |
| offset | integer | Offset in data content. | No, default 0 |
| byte Length | integer | Number of byte to use in data content. | No, default is content size |
| If type is "dense" { | | | |
| dims | integer[1-*] | Dimension of tensor | Yes |
| dtype | string | Type of values, like "f32", "f64", "i8", ... | Yes |
| } | | | |
| If type is "sparse" { | | | |
| dims | integer[1-*] | Dimension of tensor | Yes |
| count | integer | Number of a 2-tuple (index, value) in data content | Yes |
| dtype | string | Type of values, like "f32", "f64", "i8", ... | Yes |
| itype | string | Type of indices, like "i32", "i64", ... | Yes |
| } | | | |
| If type is "image" { | | | |
| mimeType | string | Image mime type, like "image/png" | No |
| dims | integer[2] | Image size | No |
| ctype | string | Type of colors, like "RGB", "YUV", ... | No |
| dtype | string | Type of color values, like "f32", "f64", "i8", ... | No |
| } | | | |
| If type is "tuples" { | | | |
| count | integer | Number of tuples | No |
| dtype | string | Type of tuple values, like "f32", "f64", "i8", ... | Yes |
| itype | string | Type of tuple sizes, like "i32", "i64", ... | Yes |
| } | | | |
| If type is "composite" { | | | |
| items | integer[1-*] | List of references to a "RawData". | Yes |
| } | | | |
| If type is "generated" { | | | |
| model | integer | References an item in the "models" collections. | Yes |
| input | integer | References an item in the "data" collections. | Yes |

(continued)

| Name | Type | Description | Required |
|------|------|-------------|----------|
| output | RawDataType | A "RawDataType" element that defines the type of data. | Yes |
| } | | | |

The "composite" value type contains a list of integers, which references a "RawData" item. This type of data may be used to aggregate several "RawData" items. For instance, the "composite" value type may be used as an input to a particular model in "models" or to another function which requires a reference to multiple data items.

The "generated" value type contains a reference to a model in the "models" list. The "input" property contains a reference to a "RawData" item, and the "output" property contains an instance of "*RawDataType*", which defines the type of "RawData" element. The "input" element is a reference to a data item. The "input" element may, for instance, use the type "composite" to aggregate several data elements and provide as input data items to the referenced "model". The "output" contains the type of data to be generated by the model. This allows for an application to initialize buffers and memory space to receive data generated by the referenced model.

In the scenario that the "generated" and "composite" types are being used, in one embodiments the "uri" may have the value "null:null" to signal that is to be ignored.

In some embodiments, the "uri" is not required and has a default value of "null:null" to indicate to the decoder/application that the content is not being used.

**RawDataType Definition**

A "RawDataType" object defines the type of "RawData" expected to be used by some function, model, algorithm, or application. The objective is to predetermine at parsing/compiling the format of the data expected to be written and/or read by the decoder and/or an application. Table 7 describes the "RawDataType" semantics.

**Table 7.**

| Name | Type | Description | Required |
|------|------|-------------|----------|
| description | string | RawDataType description. | No |
| type | string | Data type: "dense", "sparse", "image", "tuples" or "composite". | Yes |
| If type is "dense" { | | | |
| dims | integer[1-*] | Dimension of tensor | Yes |
| dtype | string | Type of values, like "f32", "f64", "i8", ... | Yes |
| } | | | |
| If type is "sparse" { | | | |
| dims | integer[1-*] | Dimension of tensor | Yes |
| dtype | string | Type of values, like "f32", "f64", "i8", ... | Yes |
| itype | string | Type of indices, like "i32", "i64", ... | Yes |
| } | | | |
| If type is "image" { | | | |
| dims | integer[2] | Image size | No |
| ctype | string | Type of colors, like "RGB", "YUV", ... | No |
| dtype | string | Type of color values, like "f32", "f64", "i8", ... | No |
| } | | | |
| If type is "tuples" { | | | |
| dtype | string | Type of tuple values, like "f32", "f64", "i8", ... | Yes |
| itype | string | Type of tuple sizes, like "i32", "i64", ... | Yes |

(continued)

| Name | Type | Description | Required |
|------|------|-------------|----------|
| } | | | |
| If type is "composite" { | | | |
| items | RawDataType[1-*] | List "RawDataType" to be use has compositing elements. | Yes |
| } | | | |

The "description" property describes the data type. For instance, a description may be used by a user interface to help the user understand what the data type is.

The "type" property defines the type of data. For instance, if the "type" property is "dense", the data type represents all tensors of dimensions defined by the "dims" property and of a value type defined by "dtype". For example, if "dims" is [3, 3] and "dtype" is "f32", then this data type represents a 3x3 matrix of 32-bit float values.

**Dense Tensor Definition**

If the "type" property is "dense", then the item represents a tensor (or multidimensional array). In this case, the tensor is represented using all the values of the tensor.

The "dims" property defines the tensor dimensions, from left to right. The total number of values in the tensor is the product of these dimensions. For instance, if "dims" is [2,7,4], then the first dimension is 2, the second dimension is 7 and the third dimension is 4. The total number of values in this example is then 2 * 7 * 4 = 56.

The "dtype" property defines the type of values in the tensor. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

**Sparse Tensor Definition**

If "type" is "sparse", the item contains a tensor (or multidimensional array). In this case, the tensor is represented with a list of 2-tuples (index, value), where index is the location of the value in the tensor. An index is the 1D indexing of cells in a tensor. For tensors with more than one dimension, the 1D indexing is obtained thanks to a "flattening" of the tensor, knowing that the ordering of values is row-major. For example, if the dimensions of the tensor are [a, b, c], then the 1D-index of the 3D-index (x, y, z) is given by Eq. 1:

$$\text{1D Index} = (x * b + y) * c + z \qquad (1)$$

The "dims" property defines the tensor dimensions, from left to right. The total number of values in the tensor is the product of these dimensions. For instance, if "dims" is [2, 7, 4], then the first dimension is 2, the second dimension is 7 and the third dimension is 4. The total number of values in this example is then 2 * 7 * 4 = 56.

The "dtype" property defines the type of values in the tensor. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

The "itype" property defines the type of indices in the 2-tuple list. If "itype" is "i8", then the values in the tensor are 8-bit signed integers. If "itype" is "u8", then the values in the tensor are 8-bit unsigned integers. If "itype" is "i16", then the values in the tensor are 16-bit signed little-endian integers. If "itype" is "u16", then the values in the tensor are 16-bit unsigned little-endian integers. If "itype" is "i32", then the values in the tensor are 32-bit signed little-endian integers. If "itype" is "u32", then the values in the tensor are 32-bit unsigned little-endian integers. If "itype" is "i64", then the values in the tensor are 64-bit signed little-endian integers. If "itype" is "u64", then the values in the tensor are 64-bit unsigned little-endian integers.

## Image Definition

If "type" property is "image", then the item contains an image, e.g. a 2D array of pixel values in a specific color space. The "dims" property is the size of the image [width, height]. The "ctype" property defines the format of pixels. If "ctype" property is "RGB", then the image has red, green, and blue pixels. If "ctype" property is "RGBA", then the image has red, green, blue, and alpha pixels.

The "dtype" property defines the type of pixel values. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers. For instance, if the "ctype" property is "RGB" and the "dtype" property is "f32", then each pixel has three 32-bit floating values.

## Tuples Definition

If the "type" property is "tuples", then the item contains a list of tuples. Each tuple has the same type of value but may have different numbers of values. Also, each tuple may have 0 or more values.

The "dtype" property defines the type of values in the tuples. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

The "itype" property defines the type of indices in the tuples. If "itype" is "i8", then the values in the tensor are 8-bit signed integers. If "itype" is "u8", then the values in the tensor are 8-bit unsigned integers. If "itype" is "i16", then the values in the tensor are 16-bit signed little-endian integers. If "itype" is "u16", then the values in the tensor are 16-bit unsigned little-endian integers. If "itype" is "i32", then the values in the tensor are 32-bit signed little-endian integers. If "itype" is "u32", then the values in the tensor are 32-bit unsigned little-endian integers. If "itype" is "i64", then the values in the tensor are 64-bit signed little-endian integers. If "itype" is "u64", then the values in the tensor are 64-bit unsigned little-endian integers.

## Composite Definition

If the "type" property is "composite", then the "items" property defines a list of "RawDataType" elements. Each element in the list is a data type, so such a structure allows the creation of nested data type elements. This functionality allows the use of multiple items of data. For instance, applications and/or decoders may initialize buffers and/or allocate memory space for data that has yet to be generated and may not yet be available at parsing and/or compilation time.

## AJIF Schemas Example and Parsing

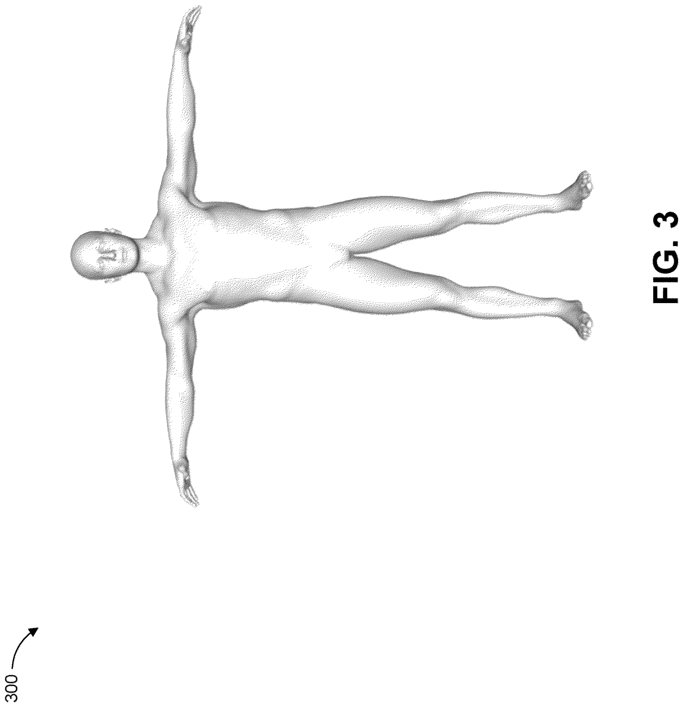

FIG. 3 is a schematic illustration showing an example avatar mesh according to some embodiments. The mesh 300 of FIG. 3 may be used an example avatar mesh that, for some embodiments, may be used as the avatar corresponding to the various properties described herein.

The example in Code Listing 1 considers a full body mesh whose vertices are generated by a model in the list of "models".

```
{
  "asset": {
    "version":   "1.0",
    "copyright": "Interdigital R&D"
  },
  "models": [
    {
      "name":    "morphable_model",
      "version": 1.0,
      "format":  "binary",
      "type":    "networks",
      "uri":     "morphable_model.bin"
    }
  ],
  "data": [
    {
      "name":  "0_positions",
```

```
      "type":   "dense",
      "dims":   [53698, 3],
      "dtype": "f32",
      "uri":    "0_positions.bin"
    },
    {
      "name":   "0_normals",
      "type":   "dense",
      "dims":   [53698, 3],
      "dtype": "f32",
      "uri":    "0_normals.bin"
    },
    {
      "name":   "0_uvs0",
      "type":   "dense",
      "dims":   [53698, 2],
      "dtype": "f32",
      "uri":    "0_uvs0.bin"
    },
    {
      "name":   "0_faces",
      "type":   "dense",
      "dims":   [53496, 4],
      "dtype": "i32",
      "uri":    "0_faces.bin"
    },
    {
      "name":        "0_AU1_L",
      "type":        "sparse",
      "dims":        [53698, 3],
      "count":       [1293],
      "dtype":       "f32",
      "itype":       "i16",
```

```
      "uri":        "0_blendshapes.bin",
      "offset":     0,
      "byteLength": 28446
    },
    {
      "name":        "0_AU1_R",
      "type":        "sparse",
      "dims":        [53698, 3],
      "count":       [1293],
      "dtype":       "f32",
      "itype":       "i16",
      "uri":         "0_blendshapes.bin",
      "offset":      28446,
      "byteLength":  28446
    },
    {
      "name":  "0_albedo",
      "type":  "image",
      "dtype": "f32",
      "ctype": "RGB",
      "uri":   "0_albedo.png"
    },
    {
      "name":        "0_albedo_displacements0",
      "type":        "dense",
      "dims":        [512, 512, 3],
      "dtype":       "f32",
      "uri":         "0_albedo_displacements.bin",
      "offset":      0,
      "byteLength":  3145728
    },
    {
      "name":        "0_albedo_displacements1",
```

```
                "type":       "dense",
                "dims":       [512, 512, 3],
                "dtype":      "f32",
                "uri":        "0_albedo_displacements.bin",
                "offset":     3145728,
                "byteLength": 3145728
        },
        {
                "name":       "picture",
                "type":       "image",
                "uri":        "picture.png",
                "mimeType":   "image/png",
                "dims":       [256, 256],
                "dtype":      "f32",
                "ctype":      "RGB"
        },
        {
                "name":       "points",
                "type":       "dense",
                "uri":        "points.bin",
                "dims":       [256, 3],
                "dtype":      "f32",
                "offset":     0,
                "byteLength": 3072
        },
        {
                "name":   "inputs",
                "type":   "composite",
                "uri":    "null:null",
                "items":  [9, 10]
        },
        {
                "name":   "model",
```

```
      "type":    "generated",
      "model":   0,
      "input":   11,
      "uri":     "null:null",
      "output": [{
        "type":   "dense",
        "dims":   [53698, 3],
        "dtype": "f32"
      }]
    }
  ],
  "geometries": [
    {
      "vertices": 12
      "normals":  1,
      "uvs":       [2],
      "faces": {
        "vertices": 3,
        "normals":  3,
        "uvs":       [3]
      },
      "blendshapes": [
        {
          "name":         "AU1_Inner_Brow_Raiser_L",
          "mapping":      "facs:AU1",
          "side":         "left",
          "displacements": 4
        },
        {
          "name":         "AU1_Inner_Brow_Raiser_R",
          "mapping":      "facs:AU1",
          "side":         "right",
          "displacements": 5
```

```
            }
        ],
        "textures": [
            {
                "type":  "albedo",
                "uvs":    0,
                "image": 6,
                "basis": [
                    {
                        "displacements": 7
                    },
                    {
                        "displacements": 8
                    }
                ]
            }
        ]
    }
]
}
```

**Code Listing 1.**

An example code parser may parse the code shown in Code Listing 1. The example in Code Listing 1 shows four root data structure sections: "asset", "models", "data", and "geometries". The code parser may first decode the "asset" root property and ensure that the code parser is able to handle the particular version of the file. Since the "version" property indicates a version of "1.0", the parsing may continue. The remaining three root data structure sections ("models", "data", and "geometries") correspond to three rows of Table 4.

The code parser may decode the first geometry of the "geometries" structure root list. For the example shown in Code Listing 1, the code parser finds several properties that reference data in the "data" structure root list. In each case, the code parser decodes the item found in the "data" root list and associates the decoded data to the referenced property. For example, the "vertices" property of the "geometries" structure refers to the last item of the "data" root list (index 12, which corresponds to the "model" property within the "data" structure). The code parser parses the "type" property, and if the "type" property is equal to "generated" (which is true for the example shown in Code Listing 1), the code parser parses and loads the "model" property. The "model" property references an element of the "model" structure. In this example, the referenced element (index 0) is the first and only element of the list of models. The referenced "model" (which has a "name" property of "morphable_model") is parsed and loaded, respectively. The "format" (equal to "binary") and "version" ("1.0") properties of this referenced model may be parsed to ensure software and hardware compatibility. The "type" property signals the type of function/model used, and the "uri" property indicates the location that may be used to retrieve the model's data.

Once the referenced "model" is parsed, the code parser loads the "input" property of the referenced "data" structure, which references data in the "RawData" list. In this example, the referenced data structure has an index of 11. The "RawData" item with an index of 11 has a "type" property equal to "composite". This value for the "type" property results in an aggregation of several input "RawData" items being given to the referenced "model" structure mentioned earlier. For this example, the "composite" type data contains two elements (items corresponding to indexes 9 and 10). The first element is an image, and the second element is a set of dense points. These elements are available and loaded. Once the "input" is parsed and loaded, the parser checks the "uri" values of the data element. If the "uri" is equal to "null: null", then this data element is ignored.

Lastly, for this example, the code parser loads the "output" property that makes a reference to a "RawDataType" element. In this example, the outputs are the vertices that the "model" will generate/modify given an "input" and "model" previously parsed. The "output" set of data in this example is used to define the vertices of the avatar geometry. The normals ("normals" property), uvs ("uvs" list), and their corresponding face indices (found in the "faces" property) are decoded and added to the geometry of the avatar.

For this example, the code parser finds two blendshape elements in the "blendshapes" list of the "geometries" structure. Their names are "AU1_Inner_Brow_Raiser_L" and "AU1_Inner Brow_Raiser_R" (decoded from the "name" property). Both elements are based on the Action Unit 1 from the Facial Action Coding System (FACS) specification (decoded from the "mapping" property). See Facial Action Coding System, WIKIPEDIA, available at: en<dot>wikipedia<dot>org/wiki/Facial Action Coding System (last accessed Aug. 7, 2024). The first blendshape element updates the left side of the avatar, and the second element updates the right side (decoded from / indicated by the "side" property). The code parser builds a sparse tensor for each blendshape using the "displacements" property. This sparse representation may be kept as is, or, for instance, may be merged into a single, dense tensor with dimensions of [2, 53698, 3].

The code parser decodes a texture from the first item of the "textures" list of the "geometries" structure. The texture type is "albedo" (found in the "type" property). The texture uses the first uvs definition (UV coordinates +face indices) of the geometry, since the "uvs" property of the "texture" structure indicates an index of 0. The texture image is built from the "data" item for index 6 (which is indicated by the "image" property). The code parser loads the image file "0_albedo.png" and converts the image to a 32-bit float RGB image, given the "dtype" and "ctype" properties of the data item.

The code parser decodes the "basis" list and gets two 32-bit float dense tensor of dimension [512, 512, 3] with texture displacements. The code parser decodes the content of the geometry item and gathers (all) the corresponding data in an internal structure, like scene objects found in game engines. Since the first node references a geometry and has no children, the resulting avatar mesh is made of only a single geometry.

**gITF Schemas Example and Parsing**

The example in Code Listing 2 considers the extension "MPEG_node_avatar" in a full body mesh whose vertices are generated by a model in the list of "models":

```
{
  "asset": {
    "generator": "Interdigital R&D France, Video Lab, MetaVideo,
Interactive Media, Immersive teleprescence",
    "version":    "2.0"
  },
  "extensionsUsed": ["MPEG_node_avatar"],
  "accessors":       [...],
  "bufferViews":     [...],
  "buffers":         [...],
  "meshes":          [...],
  "nodes": [{
    "extensions": {
      "MPEG_node_avatar": {
        "isAvatar": true,
        "mappings": [{
          "node": 0,
          "path": "full_body"
        }],
        "model": {
```

```
        "name":        "morphable_model",

        "desciption": "Model to morph an avatar face mask",

        "purpose":     "urn:mpeg:avatar:model:facegenerator",

        "version":     1.0,

        "format":      "binary",

        "type":        "networks",

        "id":          "avatar-face-mask",

        "uri":         "morphable_model.bin"

      }

    }

  },

  "mesh": 0

}],

"scene":   0,

"scenes": [{

  "nodes": [0]

}]

}
```

**Code Listing 2.**

An example code parser may parse the code shown in Code Listing 2. The example in Code Listing 2 focuses on four root sections: "asset", "nodes", "scene", and "scenes". Code Listing 2 has other root data structures, but this description will only discuss these four structures. The code parser may first decode the "asset" root structure and ensure that the code parser is able to handle the particular version of the file. Since the "version" property indicates a version of "2.0", the parsing may continue.

The "scene" element indicates an index of 0 to be used with the "scenes" array. Index 0 of the "scenes" array is a "nodes" property. The "nodes" property indicates an index of [0] to be used with the "nodes" array section.

For this example, the "nodes" array has a single entry, namely index [0]. Index [0] of the "nodes" array uses the "MPEG_node_avatar" extension for the data format structure. For this example, the element "isAvatar" is set to true to indicate that the node is associated with an avatar. The "mappings" element indicates that the node is 0 and that the "path" element indicates "full body" with respect to the avatar. The "model" structure is populated with several bibliographic fields. These fields are also shown in Table 5.

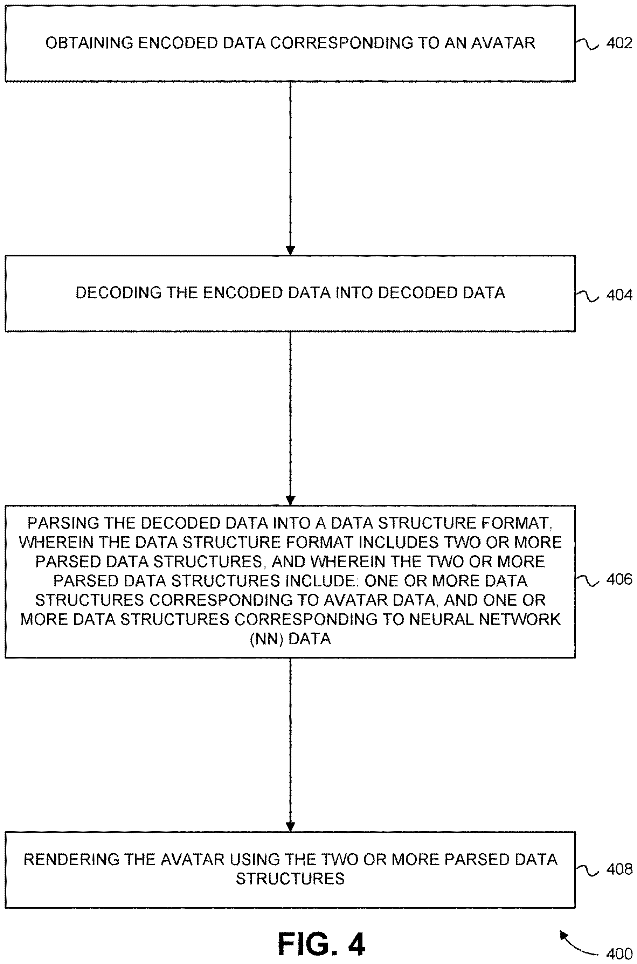

FIG. 4 is a flowchart illustrating an example process for parsing avatar and neural network data according to some embodiments. For some embodiments, an example process 400 may include obtaining 402 encoded data corresponding to an avatar. For some embodiments, the example process 400 may further include decoding 404 the encoded data into decoded data. For some embodiments, the example process 400 may further include parsing 406 the decoded data into a data structure format, wherein the data structure format includes two or more parsed data structures, and wherein the two or more parsed data structures include: one or more data structures corresponding to avatar data, and one or more data structures corresponding to neural network (NN) data. For some embodiments, the example process 400 may further include rendering 408 the avatar using the two or more parsed data structures.

A first example method in accordance with some embodiments may include: obtaining a set of avatar data corresponding to an avatar; encoding the set of avatar data in a transmission format; obtaining a set of neural network (NN) data corresponding to the avatar; encoding the set of neural network (NN) data in the transmission format; packaging the encoded avatar data and encoded NN data together as packaged data; and transmitting the packaged data to another device.

A first example apparatus in accordance with some embodiments may include: a processor; and a memory storing instructions operative, when executed by the processor, to cause the apparatus to perform the first example method.

A second example method in accordance with some embodiments may include: obtaining encoded data corresponding to an avatar; decoding the encoded data into decoded data; splitting the decoded data into avatar data and neural network (NN) data; and rendering the avatar using the avatar data and the NN data.

A second example apparatus in accordance with some embodiments may include: a processor; and a memory storing instructions operative, when executed by the processor, to cause the apparatus to perform the second example method.

A third example method in accordance with some embodiments may include: obtaining native format data associated with an avatar, wherein the native format data includes two or more data structures, and wherein the two or more data structures include: one or more data structures corresponding to avatar data, and one or more data structures corresponding to neural network (NN) data; rocessing the native format data in preparation for encoding; encoding the processed native format data into encoded data; and transmitting the encoded data to another device.

A third example apparatus in accordance with some embodiments may include: a processor; and a memory storing instructions operative, when executed by the processor, to cause the apparatus to perform the third example method.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining encoded data corresponding to an avatar; decoding the encoded data into decoded data; parsing the decoded data into a data structure format, wherein the data structure format comprises two or more parsed data structures, and wherein the two or more parsed data structures comprise: one or more data structures corresponding to avatar data, and one or more data structures corresponding to neural network (NN) data; and rendering the avatar using the two or more parsed data structures.

For some embodiments of the example method, the data structure format is compatible with Avatar JSON Interchange File (AJIF) format.

For some embodiments of the example method, the data structure format is compatible with Graphics Library Transmission Format (glTF).

For some embodiments of the example method, the data structure format is compatible with an extension of MPEG-I.

For some embodiments of the example method, the two or more parsed data structures comprise one or more models associated with the avatar.

For some embodiments of the example method, the two or more parsed data structures comprise one or more data structures corresponding to parameters of the avatar.

For some embodiments of the example method, the two or more parsed data structures comprise one or more data structures corresponding to geometries of the avatar.

For some embodiments of the example method, at least one of the one or more data structures corresponding to neural network (NN) data is associated with the avatar.

For some embodiments of the example method, at least one of the two or more parsed data structures references a composite of at least two of the two or more parsed data structures.

For some embodiments of the example method, at least one of the two or more parsed data structures is configured as a generated data type.

For some embodiments of the example method, the at least one parsed data structure configured as the generated data type comprises: a reference to a neural network data model, a reference to at least one raw data set configured as an input to the neural network data model, and an output data structure configured to store output data of the neural network data model.

Some embodiments of the example method may further include: passing the at least one raw data set through the neural network data model; and populating the output data structure with the output data of the neural network data model.

For some embodiments of the example method, the at least one raw data set comprises a composite of at least two or more data structures.

For some embodiments of the example method, one of the at least two or more data structures comprises point cloud data.

An example apparatus in accordance with some embodiments may include: a processor; and a memory storing instructions operative, when executed by the processor, to cause the apparatus to perform any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

    obtaining encoded data corresponding to an avatar;
    decoding the encoded data into decoded data;
    parsing the decoded data into a data structure format,

        wherein the data structure format comprises two or more parsed data structures, and
        wherein the two or more parsed data structures comprise:

            one or more data structures corresponding to avatar data, and
            one or more data structures corresponding to neural network (NN) data; and

    rendering the avatar using the two or more parsed data structures.

2. The method of claim 1, wherein the data structure format is compatible with Avatar JSON Interchange File (AJIF) format.

3. The method of claim 1, wherein the data structure format is compatible with Graphics Library Transmission Format (glTF).

4. The method of claim 1, wherein the data structure format is compatible with an extension of MPEG-I.

5. The method of any one of claims 1-4, wherein the two or more parsed data structures comprise one or more models associated with the avatar.

6. The method of any one of claims 1-5, wherein the two or more parsed data structures comprise one or more data structures corresponding to parameters of the avatar.

7. The method of any one of claims 1-6, wherein the two or more parsed data structures comprise one or more data structures corresponding to geometries of the avatar.

8. The method of any one of claims 1-7, wherein at least one of the one or more data structures corresponding to neural network (NN) data is associated with the avatar.

9. The method of any one of claims 1-8, wherein at least one of the two or more parsed data structures references a composite of at least two of the two or more parsed data structures.

10. The method of any one of claims 1-9, wherein at least one of the two or more parsed data structures is configured as a generated data type.

11. The method of claim 10, wherein the at least one parsed data structure configured as the generated data type comprises:

    a reference to a neural network data model,
    a reference to at least one raw data set configured as an input to the neural network data model, and
    an output data structure configured to store output data of the neural network data model.

12. The method of claim 11, further comprising:

passing the at least one raw data set through the neural network data model; and
populating the output data structure with the output data of the neural network data model.

13. The method of any one of claims 11-12, wherein the at least one raw data set comprises a composite of at least two or more data structures.

14. The method of claim 13, wherein one of the at least two or more data structures comprises point cloud data.

15. An apparatus comprising:

a processor; and
a memory storing instructions operative, when executed by the processor, to cause the apparatus to perform the method of any one of claims 1 through 14.

**FIG. 1A**

EP 4 694 141 A1

**FIG. 1B**

FIG. 1C

EP 4 694 141 A1

FIG. 1D

**FIG. 2**

EP 4 694 141 A1

FIG. 3

300

OBTAINING ENCODED DATA CORRESPONDING TO AN AVATAR — 402

DECODING THE ENCODED DATA INTO DECODED DATA — 404

PARSING THE DECODED DATA INTO A DATA STRUCTURE FORMAT, WHEREIN THE DATA STRUCTURE FORMAT INCLUDES TWO OR MORE PARSED DATA STRUCTURES, AND WHEREIN THE TWO OR MORE PARSED DATA STRUCTURES INCLUDE: ONE OR MORE DATA STRUCTURES CORRESPONDING TO AVATAR DATA, AND ONE OR MORE DATA STRUCTURES CORRESPONDING TO NEURAL NETWORK (NN) DATA — 406

RENDERING THE AVATAR USING THE TWO OR MORE PARSED DATA STRUCTURES — 408

# FIG. 4

400

Europäisches
Patentamt

European
Patent Office

Office européen
des brevets

# EUROPEAN SEARCH REPORT

**Application Number**

EP 24 30 6342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JOAO REGATEIRO (INTERDIGITAL) ET AL: "[42.2][SD] Avatar JSON Interchangeable Format", 147. MPEG MEETING; 20240715 - 20240719; SAPPORO; (MOTION PICTURE EXPERT GROUP OR ISO/IEC JTC1/SC29/WG11), , no. m68986 10 July 2024 (2024-07-10), XP030322670, Retrieved from the Internet: URL:https://dms.mpeg.expert/doc_end_user/d ocuments/147_Sapporo/wg11/m68986-v1-m68986 _avatar_json_Interchangeable_format.zip m68986_avatar_json_Interchangeable_format. docx [retrieved on 2024-07-10] * the whole document * ----- | 1-15 | INV. H04N21/234 H04N21/44 H04N21/81 H04N21/854 G06T17/00 |
| Y | IMED BOUAZIZI ET AL: "[FS_AVATAR] Permanent Document for Avatar, v0.4.0", 3GPP DRAFT; S4-241185; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Jeju, KR; 20240520 - 20240524 24 May 2024 (2024-05-24), XP052611034, Retrieved from the Internet: URL:https://www.3gpp.org/ftp/TSG_SA/WG4_CO DEC/TSGS4_128_Jeju/Docs/S4-241185.zip S4-241185_[FS_AVATAR]_Permanent_Document_v 0.4.0_cl.docx [retrieved on 2024-05-24] * section 3.5 * ----- -/-- | 1-15 | **TECHNICAL FIELDS SEARCHED (IPC)** H04N G06T |

The present search report has been drawn up for all claims

| Place of search | Date of completion of the search | Examiner |
|---|---|---|
| Munich | 15 January 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

**EUROPEAN SEARCH REPORT**

Europäisches Patentamt
European Patent Office
Office européen des brevets

| Application Number |
| --- |
| EP 24 30 6342 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | ZHENG YUFENG ET AL: "PointAvatar: Deformable Point-Based Head Avatars from Videos", 2023 IEEE/CVF CONFERENCE ON COMPUTER VISION AND PATTERN RECOGNITION (CVPR), IEEE, 17 June 2023 (2023-06-17), pages 21057-21067, XP034401348, DOI: 10.1109/CVPR52729.2023.02017 [retrieved on 2023-08-22] * section 3.; figure 2 * ----- | 14 | |

| | | | TECHNICAL FIELDS SEARCHED (IPC) |
| --- | --- | --- | --- |

The present search report has been drawn up for all claims

| Place of search | Date of completion of the search | Examiner |
| --- | --- | --- |
| Munich | 15 January 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24306341 A
- EP 24305094 A
- EP 23306745 A

**Non-patent literature cited in the description**

- Facial Action Coding System. *WIKIPEDIA*, 07 August 2024